# EUROPEAN PATENT SPECIFICATION

(11) **EP 0 575 943 B1**
(45) Date of publication and mention of the grant of the patent: **03.09.1997**
(21) Application number: 93109895.8
(22) Date of filing: 21.06.1993
(51) Int. Cl.: G01C 21/20

(54) **Route searching apparatus for vehicle**
Routensuchvorrichtung für Fahrzeug
Dispositif de recherche de route pour véhicule

(30) Priority: 23.06.1992 JP 205861/92
(43) Date of publication of application: 29.12.1993
(73) Proprietor: HONDA GIKEN KOGYO KABUSHIKI KAISHA, Minato-ku, Tokyo (JP)
(72) Inventor: Matsumoto, Yoshiyuki, c/o K. K. Honda Gijyutsu, Wako-shi, Saitama (JP)
(74) Representative: Prechtel, Jörg, Dipl.-Phys. Dr.

(56) References cited:
- EP-A- 0 246 452
- EP-A- 0 372 840
- EP-A- 0 393 632
- Proceedings of the Vehicle Navigation & In formation Systems Conference VNIS 91, October 1991, P-253, Part 1, pp283-290, T.A.YANG et al.: "Path Planning and Evaluation in IVHS Databases"
- Conference Record of Papers presented at the First Vehicle Navigation and Informa tion Systems Conference VNIS 89, 11-13 September, 1989, Toronto, Ontario, Canada, pages 165-169, J.GUZOLEK et al.: "Real-Time Route Planning in Road Networks"
- Proceedings of The Seventh Conference on Artificial Intelligence Applications, 24 28 February 1991, Miami, Florida, USA, pages 308-314, A.K.GOEL et al.: "Representation, Organization, and Use of Topographic Models of Physical Spaces for Route Planning"
- PATENT ABSTRACTS OF JAPAN vol. 11, no. 211 (P-594) 9 July 1987; & JP-A-62 032 516

## Description

The present invention relates to a method for searching an optimal vehicle travelling course connecting two points preset on a road map according to the preamble part of claim 1.

The Japanese laid open patent publications No.133600-87 and No. 173297-89 disclose a travelling course searching apparatus for vehicle, which is capable of searching an optimal course connecting with each other two points preset on a road map by using the road map data, and which is capable of setting any start and target points on a road map shown on a display screen and searching an optimal course therebetween on the basis of the digitized map data to guide the vehicle.

A basic method for searching an optimal course on the basis of the digital map data consists in that nodes of line segments connecting a start point to a target point on a road map are sequentially searched according to a known algorithm such as "Dijkstra" so as to obtain the shortest distance therebetween.

However, today's road maps contain an increased quantity of road data other than road distances, which may be applied for finding further optimal course from a start point to a target point in view of road parameters other than the shortest distance. Therefore, a prior art disclosed in the Japanese laid open patent publications No.138409-89 is adapted to search a vehicle's travelling course according to a function for evaluating travel costs relating to such variable parameters as a total distance from a start point to a target point and a mean travel time to be required, a road width, a number of turns of roadway and so on, and thereby to find an optimal course of the least cost.
A synthetically evaluating function Ci for a portion i of a travel course is, by way of example, expressed as follows:${\text{Ci = k1·ℓi + k2·ti + k3·wi + k4·ni}}^{\text{2}}$ where ℓi - a distance cost, ti - a mean travel time cost, wi - a road width cost, k1 to k4 - weight coefficients of respective costs on the condition that k1, k2, k3, k4 ≧ 0.

Since the wider road may decrease a travelling cost, the road width cost wi at a distance ℓi and a mean road width Wi can be expressed as wi = ℓi/Wi .

The equation (1) means that the travelling cost of the course portion may increase as the distance and the mean travelling time increase and may decrease as the road width increases (making easier to drive the vehicle). If the number of turns of the course portion is small, it may scarcely affect the travelling cost. But, a large number of turns causes a heavy load to the driver, thereby sharply increasing the travelling cost.

In reverse to the above-mentioned evaluating function it is also possible to induce such an evaluating function that an optimal course may be of the maximum value.

The introduction of such a synthetically evaluating function makes it possible to judge which one among different courses shall be selected in view of a number of road parameters such as distance, mean travelling time, road width, the number of turns of a traveling course and the like by comparing the values according to the function.

However, in case of searching an optimal course from a start point to a target point by comparing costs of parameters by means of the evaluating function such a problem may occur that preset constant weight coefficients of variable parameters of the function are not always adequate to local searching conditions.

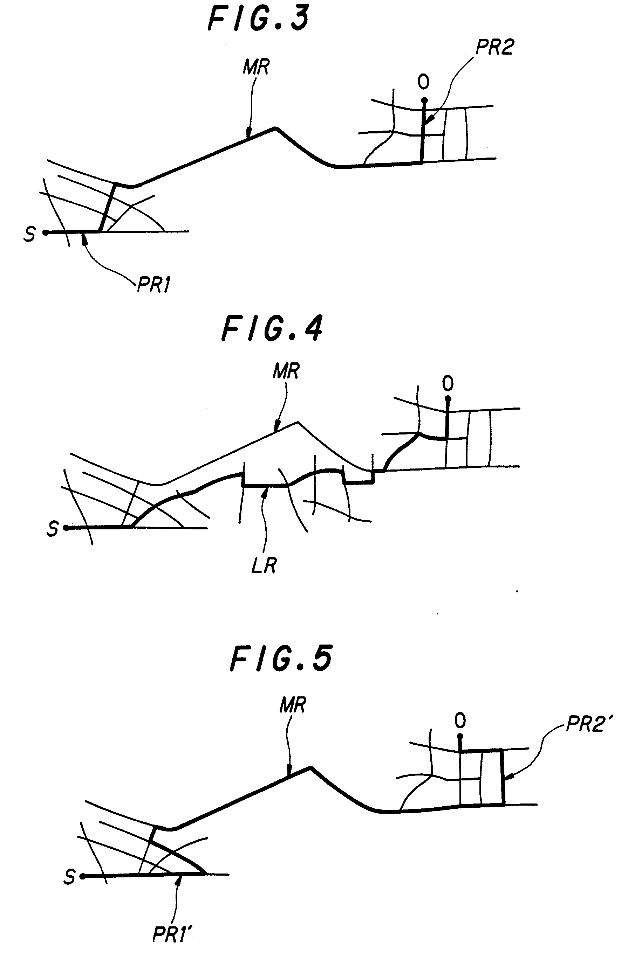

As shown in Fig. 3, for example, when a driver wishes to travel from a start point S to a target point O on a road map by selecting a main road (highway) which has generally excellent travelling cost parameters as to distance and road width, travel course searching shall be done in such a way that a highway MR extending near from the start point S and near to the target point O is first selected and then a local path PR1 connecting the start point S to the highway MR arid a local path PR2 connecting the highway MR to the target point O is searched.

If in this case a travelling course of least cost value is searched according to an equation (2) of the syntheticaly evaluating function C1 which, for example, has a weight coefficient 1.0 of distance cost ℓ and a weight coefficient 0.1 of road width cost w, and the function C1 is applied to, for example, a course portion of distance ℓ= 100 m and road width W= 5 m, the distance cost is determined as 1.0 X 100 m = 100 and the road width cost is determined as 0.1 X (100 m/5 m)= 2. Application of such function regarding the distance higher than the road-width may result in selecting a narrow local road LR instead of the highway MR as shown in Fig. 4.$\text{C1 = 1.0 X ℓ + 0.1 X (ℓ/W)}$

If a function C2 having a decreased distance cost ℓ and an increased road-width cost W as expressed by an equation (3) is applied for searching a course portion of 100 m in distance and 5 m in road width, the distance cost is determined as 0.5 X 100 m = 50 and road width cost is determined as 1.0 X (100 m/5 m) = 20. When a travelling course of the least cost is searched by use of the function C2 having the considerably weighted road-width cost, a highway MR may be selected but longer roadways PR1' and PR2' connecting the highway, respectively, to the start point S and the target point 0 may also be selected because of regarding the road width higher than the distance, as shown in Fig. 5.$\text{C2 = 0.5 X ℓ + 1.0 X (ℓ/W)}$ From document "Path Planning and Evaluation in IVHS Databases" by T.A. YANG et al, published in: Proceedings of the Vehicle Navigation & Information Systems. Conference VNIS'91, Oct. 1991, P-253, Part 1, pp. 283-290 , a method for searching an optimal vehicle travelling course between a start point and a target point is known. The optimal vehicle travelling course is the course between the start- and the target points, having associated the least travelling costs.

The document discloses a special search algorithm, called A*-algorithm, for searching the optimal vehicle travelling course. The A*-search algorithm uses heuristic information about the environment in order to narrow the search space, thus reducing the planning time. The heuristic search involves the use of a heuristic function calculating the approximate distance from an intermediate point, which can be reached from the start point, to the target point (cf. p. 284, 2nd col., second-last par.). Under certain conditions, the heuristic search using the A*-search algorithm guarantees an optimal solution (cf. p. 286, first col., last par. and 2nd col. first par.), namely that the optimal vehicle travelling course having the least travelling costs is found.

According to the document (cf. p. 284, 2nd col., last par.; p. 285, 1st col., 1st par. and section 4.1), the A*-search algorithm is applied to a hierarchical representation of the environment. For the explanation of the manner how the A*-search algorithm is applied to said hierarchical representation of the environment, the document regards optimal paths (optimal vehicle travelling courses) as synonymous with paths of shortest length. Other factors are ignored for the sake of simplicity (cf. p. 286, 2nd col., last par., ls. 5-8) . Accordingly, only the travelling distance costs are considered as travelling costs for the search in each search hierarchy.

The document discloses two search hierarchies, namely the search on a macro-level consisting of major roads, highways and freeways and the search on a micro-level containing all other types of roads, such as city streets, frontage roads and alike (cf. p. 287, 1st col., 3rd par.). Since roads of the macro-level normally do not have obstacles along their course, simpler heuristics (heuristic functions) may be used for the search in the macro-level than in the micro-level, where obstacle avoidance is necessary. Depending on the type of obstacle, encountered in the micro-level, different heuristics are used to plan a path or route around or across the obstacle (cf. p. 286, 2nd col., last par., last sentence and p. 287, 1st col., 1st and 2nd par.).

In any case, i.e. for the search in the macro-level as well as in the micro-level and irrespective of the corresponding heuristic function which is used to plan a path around or across an obstacle in the micro-level, always the travelling distance costs are the only criterion (heuristic) for selecting the least costly path (cf. p. 287, 2nd col., 3rd par., ls. 1-22). Accordingly, always the same optimal vehicle travelling course is found by said hierarchical search, namely the shortest vehicle travelling course between the start point and the target point.

The document only briefly mentions the possibility (on page 287, 2nd col., 3rd par., last eleven lines) that it might be necessary to take other parameters into account, e.g. travelling time , road-width, frequency and length of delays on a road, for the determination of the optimal vehicle travelling course.

The document "Real-Time Route Planning in Road Networks", by J. GUZOLEK et al, published in: Conference record of Papers presented at the First Vehicle Navigation and Information Systems Conference VNIS'89, 11-13 September, 1989, Toronto, Ontario, Canada, pp. 165-169 also discloses an A*-search algorithm using heuristic estimates (intelligent guesses) of the costs from a point which can be reached from a start point to a target point (p. 166 "Generating an Optimal Route", particularly the 2nd col., last par.). In this document it is stated as well that the A*-search algorithm guarantees to find an optimal path from the start point (source) to the target point (destination), if the heuristic cost (the heuristic function) fulfills certain conditions. If the heuristic cost is set to zero, the A*-search algorithm degenerates to the known Dijkstra search algorithm, mentioned in the introduction of the present application (see also p. 167 "Heuristic Variations").

For the A*-search algorithm a weighted combination of different travel cost parameters or optimization criteria is used comprising for example travelling time, travelling distance, number of turns, traffic conditions (cf. p. 167 "Optimization Criteria").

The document further discloses the possibility of selecting between different criteria by the user, the selected criterion being used for the determination of optimal routes (cf. p. 165, "Route Planning Overview").

In order to reduce the calculation time and to work within limited memory constraints, a technique called "search tree pruning" is used (cf. p. 167 "Search Tree Pruning"). This "pruning" means that some path possibilities are ignored during the search. In this context, a so-called "staged" search is disclosed which breaks the search for the optimal course between the start point and the target point into a serial list of sub-goals. The document provides the example that in case of a very long distance between the start point and the target point, the path between said points is generated in three steps by identifying an appropriate intermediary point or route. According to this scheme, first a path from the start point to the intermediary is found, then a path from the intermediary to the target point is found and finally, the partial paths are "sewed" together to generate the total path. One might say that the search is effected in different partial search levels of same hierarchy.

In view of the foregoing it is an object of the present application to provide a method for searching an optimal vehicle travelling course according to the preamble-part of claim 1 giving better search results on a local scale as well as on a regional or supra-regional scale. This object is achieved by the method having the features of claim 1.

By using, in each of a plurality of search levels, an associated set of weight coefficients for the search and at least two search levels having associated different sets of weight coefficients, it is for example possible, to use one set of weight coefficients which is adapted to local searching conditions in a search level of low hierarchy and to use another set of weight coefficients which is adapted to over-regional searching conditions in a search level of high hierarchy. Possibly, a further different set of weight coefficients which is adapted to regional searching conditions is used for the search in a search level of medium hierarchy. By proper selection of the sets of weight coefficients, it is possible to adjust the searching algorithm, so that the search algorithm finds an optimal travelling course which is identical with an optimal vehicle travelling course which a driver would select himself.

The same applies to the case of partial search levels. According to the invention it is possible to use a set of weight coefficients which is appropriate to local searching conditions for the search in the region around the start point and the target point, and to use another set of weight coefficients which is adapted to regional or supra-regional searching conditions for the search between said regions. Thus, the most appropriate optimal vehicle travelling course can be found.

In the following, an example of an embodiment of the method according to the invention and an example of a vehicle travel guiding apparatus implementing said embodiment of the method according to the invention is explained on basis of Fig. 1 to 10.

Fig. 1 is a block diagram showing an example of a vehicle travel guiding apparatus for which the present invention is applied.

Fig. 2 shows an example of a picture shown on a display screen of the apparatus shown in Fig. 1.

Fig. 3 shows an example of an optimal course from a start point to a target point preset on a road map.

Fig. 4 shows an example of a course from a start point to a target point, which is selectable when making much account on a shorter distance.

Fig. 5 shows an example of a course from a start point to a target point, which is selectable when making much account on a wider roadway.

Fig. 6 shows a start point and a target point preset on a road map of the first hierarchy.

Fig. 7 shows a start point and a target point preset on a road map of the second hierarchy.

Fig. 8 shows a start point and a target point preset on a road map of the third hierarchy.

Fig. 9 is a flow chart of data processing for hierarchical searching of a travelling course.

Fig. 10 shows divisions on a road map, which is obtained by dividing a linear distance between a start point and a target point preset on a road map into 4 even segments.

In these drawings, there are shown a distance sensor 1, a direction sensor 2, signal processing unit 3, a travelled path memory 4, a road map information memory 5, a memory reading-out device 6, a display 7 and an operating device 8.

Referring now to the drawings, a preferred embodiment of the present invention will be described in detail as follows:

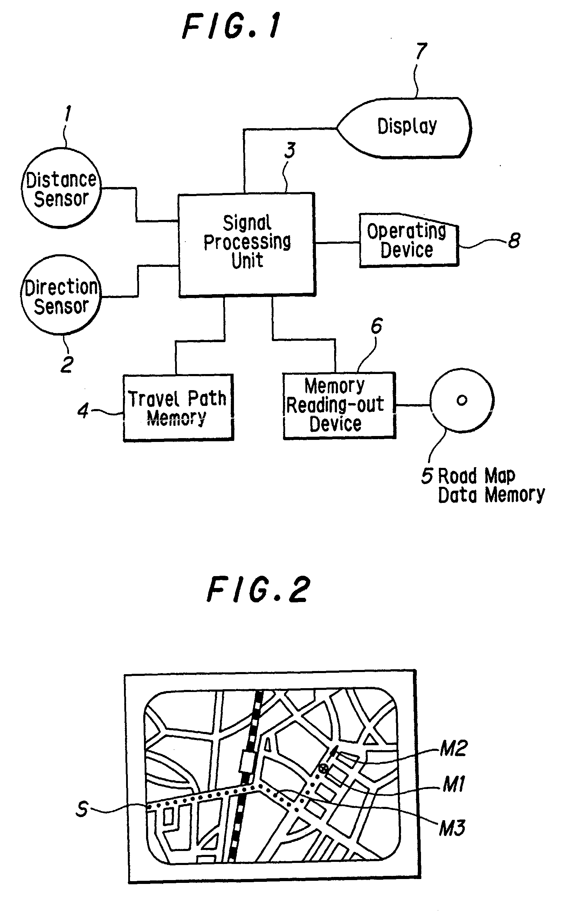

Fig. 1 shows a vehicle travelling course searching apparatus embodying the present invention, which comprises, for example, a distance sensor 1 producing a pulse signal per unit running distance to be determined by rotations per minute of the vehicle wheel axis; a direction sensor 2 producing an output signal proportional to a change of the vehicle running direction, e.g. a change of angular velocity of yaw direction; a microcomputer-aided signal processing unit 3 which calculates a travelling distance of the vehicle by counting pulse signals from the distance sensor 1, determines current location of the vehicle by X-Y coordinates by sequential calculation and controls whole system of the travel guiding apparatus; a travel path memory 4 for sequentially storing continuously changing data on coordinates of vehicle's current location and keeping said data as information of finite sequential locations; a map information memory 5 wherein digitized road map data are preliminarily stored; a reading-out device 6 for selectively reading-out road map data for necessary area from the memory 5; a display unit 7 for indicating thereon a road map reproduced on the basis of the read-out digital road map data and also for indicating thereon renewable current location of the vehicle together with its travel path and direction as necessary; an operating device 8 which gives operational commands to the signal processing unit 3 for selecting a road map area to be indicated on the screen of the display unit 7 and setting a start and a target points on the indicated map, and also selectively gives commands necessary for indicating a travel path and a running direction, changing over the direction of the indicated map and travel path, sifting indicating positions, partially enlarging the map and travel path, selecting a scale of a picture on the display screen and changing other settings for displaying.

In thus constructed apparatus, a road map is selectively read out and indicated on the screen of the display unit 7, a current location of the vehicle in X-Y coordinate system is continuously calculated to be renewed with the vehicle travelling according to the map scale preset by the signal processing unit 3, the calculation results are subsequently sent to the travel path memory unit 4 which in turn renews its memory content, and the renewed information is read out therefrom and sent to the display unit 7.

As shown in Fig. 2, while the vehicle travels on the roadway, the display unit 7 indicates the road map on its screen, imitatively indicating thereon marks M1, M2 and M3 which denote, respectively, the vehicle's current position, its current running direction and travel path from the start point S to the current position.

The vehicle travelling course searching apparatus according to the present invention is capable of searching a least-costing travelling course between two points preset on the road map shown on the display screen according to the digital road map data read-out from the road map memory 5 by the signal processing unit 3; determining an optimal course according to a synthetically evaluating function C using a plurality of travelling cost-related parameters such as distance, mean required travelling time and road width and the number of turns of the course; and indicating said course in a special color on the road map on the display screen and renewing the current location of the vehicle in the indicated course to guide the vehicle driver.

The apparatus according to the present invention executes such a basic algorithm to generally search at first a main road (highway) MR passing near the start point S and near the target point O and then to search local roads PR1 and PR2 connecting the selected main road, respectively, with the start point S and the target point O by changing weight coefficients of the cost-related parameters of the synthetically evaluating function or the function itself to be suitable for conditions of each local area.

Such an algorithm for local course searching may be proposed that a highway MR in an area between a start point S and a target point O is first searched by using data of a coarsely illustrated road map of higher hierarchy and then local roads PR1 and PR2 connecting respectively the start point S and the target point O to the previously searched highway MR by using data of a detailed road map of lower hierarchy.

In practice, the above-mentioned hierarchical course searching is carried out, for example, in the following manner:

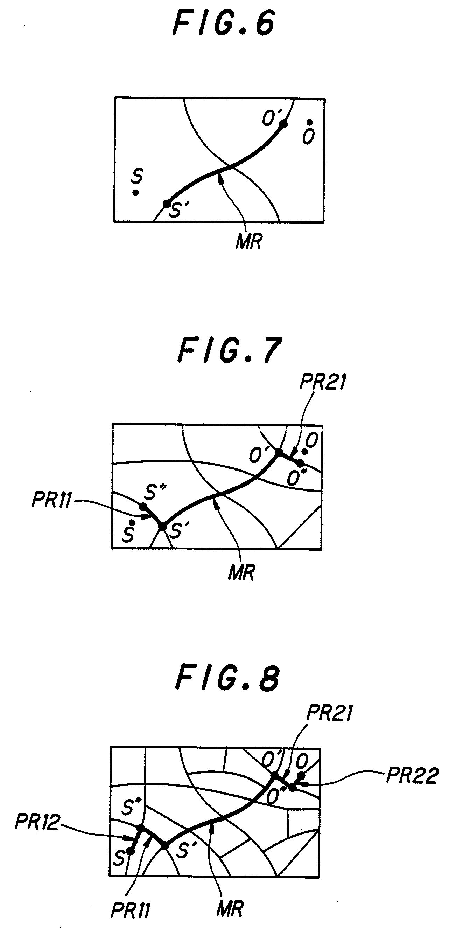

As shown in Fig. 6, the apparatus reads-out data of a road map of the first hierarchy containing national highways from the map information memory 5 and indicates the digital map on the display screen; finds thereon a node nearest to the start point S and a node nearest to the target point O assuming these points respectively as a temporary start point S' and a temporary target point O'; and then searches a highway MR existing between the temporary start point S' and the temporary target point O' on the shown map by using the synthetically evaluating function C2= 0.5ℓ + 1.0w featured by a large weight of the road-width.

Further, as shown in Fig. 7, the apparatus reads-out data of a road map of the second hierarchy containing national and state highways from the map information memory 5 and indicates the digital map on the display screen; finds thereon a node nearest to the start point S and a node nearest to the target point O assuming these points respectively as a temporary start point S'' and a temporary target point O'' and also assuming the previously searched temporary start point S' as a temporary target point and the previously searched target point O' as a temporary start point; and then searches a local course PR11 existing between the temporary start point S'' and the temporary target point S' and a local course PR21 existing between the temporary start point O' and the temporary target point O'' on the shown map by using the synthetically evaluating function C1= 1.0ℓ + 0.5w featured by a large weight of the travelling distance.

Finally, as shown in Fig. 8, the apparatus reads-out data of a road map of the third hierarchy containing city highways and upper class highways from the map information memory 5 to indicate the digital map on the display screen; and searches a local roadway PR12 connecting the start point S with the temporary start point S'' and a local roadway PR22 connecting the target point O with the temporary target point O'' by using a synthetically evaluating function C3= 1.0ℓ featured by the largest weight of the travelling distance.

By forcing the apparatus to perform the above-mentioned hierarchical processing it is possible to sequentially search locally optimal courses MR, PR11, PR21, PR12 and PR22 and thereby to finally determine an optimal course from the start point S to the target point O.

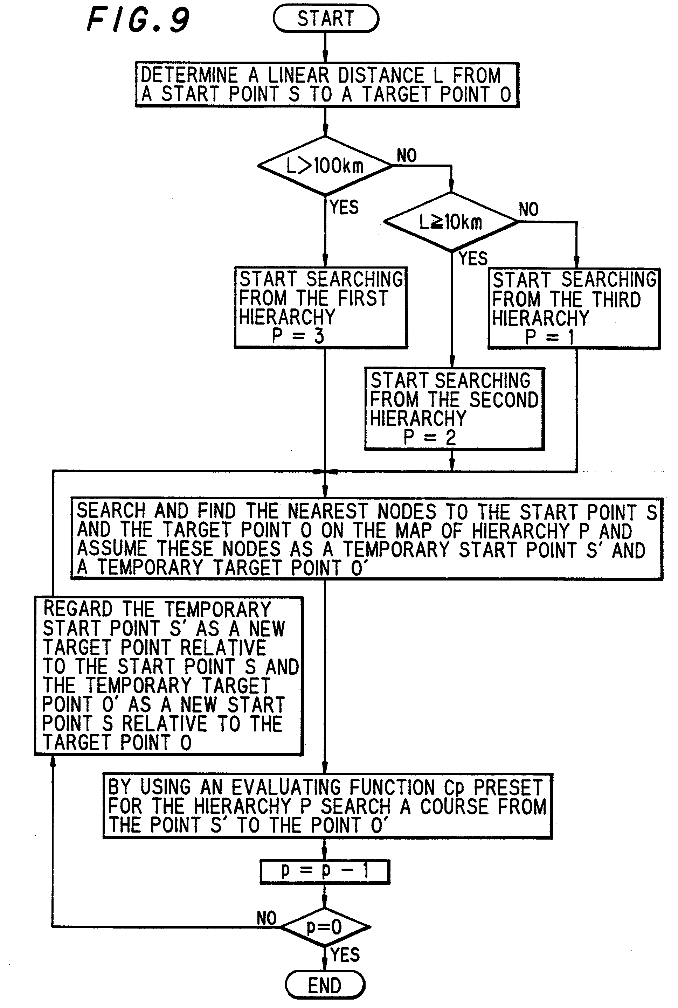

Fig. 9 shows an example of a flow-chart of hierarchical processing for searching an optimal course by the apparatus proposed by the present invention.

In this case a linear distance L from a start point S to a target point O preset on a road map is first calculated and then searching starts from the first hierarchy if the distance L is larger than 100 Km, or from the second hierarchy if the distance is within the range of 10 to 100 km.

If there is a small distance L of less than 10 km from the start point S to the target point O, the whole optimal course therebetween will be directly searched by using data of the road map of the third hierarchy, omitting the above-mentioned partial course searching operations.

Another example of a partial course searching algorithm is to divide a road map area including a start point and a target point into three or more sections to be separately searched and also to change weight coefficients of parameters for a synthetically evaluating function or the function itself in such a way that an increased weight of travelling distance may be selected when searching courses in both end sections and an increased weight of road width may be selected when searching a course (courses) in an intermediate section (sections).

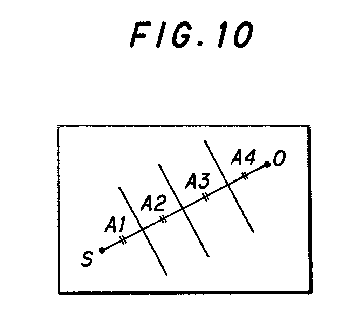

For instance, as shown in Fig. 10, it is possible to determine a linear distance L between a start point S and a target point O on a road map, divide the road map area into 4 sections A1, A2, A3 and A4 by quartering the distance L, search optimal partial courses in both end sections A1 and A4 by use of the synthetically evaluating function C1=1.0ℓ + 0.5w with an increased weight of travelling distance and search optimal partial courses in intermediate sections A2 and A3 by use of the synthetically evaluating function C1= 0.5ℓ + 1.0W with an increased weight of road width.

By doing so, it is possible to search a main course (highway) in intermediate sections A2 and A3 by priority of road width and to search roads connecting the main road with the start point S and the target point in both end sections by priority of travelling distance.

As is apparent from the foregoing description, the vehicle travelling course searching apparatus according to the present invention offers such an advantage that when searching least costing partial courses composing a whole course from a start point to a target point preset on a road map indicated on a display screen on the basis of digitized map data by using a synthetically evaluating function having travelling cost-related variable parameters such as travelling distance, road width and so on, it is possible to change weight coefficients of the parameters for the function or the function itself in accordance with each partial searching condition, i.e., to search an optimal partial course by priority of road width or travelling distance, thereby selecting an optimal whole course from the start point to the target point.

## Claims

1. Method for searching an optimal vehicle travelling course connecting two points (O, S) preset on a road map, the search being effected separately in at least two different hierarchical or partial search levels (A1, A2, A3, A4) on basis of a plurality of travelling cost-related variable parameters, such as travelling-distance, road-width and travelling-time, using a synthetical evaluation function, the weight of said travelling cost-related variable parameters in said search being determined by a set of weight coefficients determining the weight of each of said variable parameters in said evaluation function, **characterized by** using in each of said search levels an associated set of weight coefficients for the search, at least two search levels having associated different sets of weight coefficients.

2. Method for searching an optimal vehicle travelling course according to claim 1, **characterized by** said search being effected separately in at least two different hierarchical search levels, a search level of higher hierarchy having associated a less detailed road map than a search level of a lower hierarchy.

3. Method for searching an optimal vehicle travelling course according to claim 2, **characterized by** the steps of
a) searching a main course component (MR) of a course between said two points (O, S) in a search level of first hierarchy using a first set of weight coefficients,
b) searching partial course components (PR11, PR12, PR21, PR22) connecting the main course component (MR) with said two points (O, S), said search being effected locally and comprising searching in a search level of second hierarchy, using a second set of weight coefficients and possibly in a search level of third hierarchy, using a third set of weight coefficients,
wherein the first hierarchy is higher than the second hierarchy and the second hierarchy is higher than the third hierarchy, and wherein the first, second and third set of weight coefficients are different from one another.

4. Method for searching an optimal vehicle travelling course according to claims 2 to 3, **characterized in** that the set of weight coefficients associated to a search level of higher hierarchy is adapted to a search in a higher hierarchy, in particular by weighting the road-width costs higher than the travelling distance costs.

5. Method for searching an optimal vehicle travelling course acocrding to one of claims 2 to 4, **characterized in** that the set of weight coefficients associated to a search level of lower hierarchy is adapted to a search in a lower hierarchy, in particular by weighting the travel distance costs higher than the road-width costs.

6. Method for searching an optimal vehicle travelling course according to claim 1, **characterized by** said search being effected separately in at least two different partial search levels (A1, A2, A3, A4), each partial search level (A1; A2; A3; A4) corresponding to a different road map section (A1; A2; A3; A4) of a common road map.

7. Method for searching an optimal vehicle travelling course according to claim 6, **characterized by** the steps of
a) dividing a road map area of said common road map into a plurality of road map sections (A1, A2, A3, A4), said road map area including said two points (O,S)
b) providing a respective associated set of weight coefficients to each of said road map sections (A1, A2, A3, A4),
c) effecting the search in each of said road map sections (A1, A2, A3, A4) using the associated set of weight coefficients,
wherein the sets of weight coefficients associated to the end-sections (A1, A4) of said plurality of road map sections, which end-sections include one of said points (O, S), are different from the set of weight coefficients associated to an intermediate section (A2, A3) of said plurality of road map sections, which intermediate section (A2, A3) is located between said end-sections (A1, A4).

8. Method for searching an optimal vehicle travelling course according to claim 7, **characterized in** that said sets of weight coefficients associated to the end-sections (A1, A4) are adapted to a search in an end-section, in particular by weighting the travelling distance costs higher than the road-width costs.

9. Method for searching an optimal vehicle travelling course according to claim 7 or 8, **characterized in** that said set of weight coefficients associated to the intermediate section (A2, A3) is adapted to a search in an intermediate section, in particular by weighting the road width costs higher than the travelling distance costs.

## Patentansprüche

1. Verfahren zum Suchen eines optimalen Fahrzeugfahrkurses, der zwei auf einer Wegekarte vorgesetzte Punkte (O, S) verbindet, wobei die Suche gesondert in wenigstens zwei verschiedenen hierarchischen oder partiellen Suchebenen (A1, A2, A3, A4) auf Basis einer Mehrzahl von sich auf Fahrkosten beziehenden variablen Parametern, wie etwa die Fahrentfernung, die Wegebreite und die Fahrdauer, unter Verwendung einer synthetischen Bewertungsfunktion durchgeführt wird, wobei das Gewicht der sich auf die Fahrkosten beziehenden variablen Parameter in der Suche durch einen Satz von Gewichtskoeffizienten bestimmt ist, die das Gewicht jedes der variablen Parameter in der Bewertungsfunktion bestimmen,
**dadurch gekennzeichnet**, daß in jedem der Suchniveaus ein zugeordneter Satz von Gewichtskoeffizienten für die Suche verwendet wird, wobei wenigstens zwei Such-niveaus verschiedene Sätze von Gewichtskoeffizienten zugeordnet sind.

2. Verfahren zum Suchen eines optimalen Fahrzeugfahrkurses nach Anspruch 1, dadurch gekennzeichnet, daß die Suche in wenigstens zwei verschiedenen hierarchischen Suchniveaus gesondert durchgeführt wird, wobei einem in der Hierarchie höheren Suchniveau eine weniger detaillierte Wegekarte als einem in der Hierarchie niedrigeren Suchniveau zugeordnet ist.

3. Verfahren zum Suchen eines optimalen Fahrzeugfahrkurses nach Anspruch 2, gekennzeichnet durch die Schritte:
a) Suchen einer Hauptkurskomponente (MR) eines Kurses zwischen den beiden Punkten (O, S) in einem Suchniveau einer ersten Hierarchiestufe unter Verwendung eines ersten Satzes von Gewichtskoeffizienten,
b) Suchen partieller Kurskomponenten (PR11, PR12, PR21, PR22), die die Hauptkurskomponente (MR) mit den beiden Punkten (O, S) verbinden, wobei die Suche lokal durchgeführt wird und das Suchen in einem Suchniveau einer zweiten Hierarchiestufe unter Verwendung eines zweiten Satzes von Gewichtskoeffizienten und eventuell in einem Suchniveau einer dritten Hierarchiestufe unter Verwendung eines dritten Satzes von Gewichtskoeffizienten umfaßt,
wobei die erste Hierarchiestufe höher als die zweite Hierarchiestufe und die zweite Hierarchiestufe höher als die dritte Hierarchiestufe ist und wobei der erste, zweite und dritte Satz von Gewichtskoeffizienten voneinander verschieden sind.

4. Verfahren zum Suchen eines optimalen Fahrzeugfahrkurses nach den Ansprüche 2 bis 3, dadurch gekennzeichnet, daß der einem in der Hierarchie höheren Suchniveau zugeordnete Satz von Gewichtskoeffizienten einer Suche in einer höheren Hierarchiestufe angepaßt ist, insbesondere dadurch, daß die Wegebreitekosten höher gewichtet werden als die Fahrentfernungskosten.

5. Verfahren zum Suchen eines optimalen Fahrzeugfahrkurses nach einem der Ansprüche 2 bis 4, dadurch gekennzeichnet, daß der einem in der Hierarchie niedrigeren Suchniveau zugeordnete Satz von Gewichtskoeffizienten einer Suche in einer niedrigeren Hierarchiestufe angepaßt ist, insbesondere dadurch, daß die Fahrentfernungskosten höher als die Wegebreitekosten gewichtet werden.

6. Verfahren zum Suchen eines optimalen Fahrzeugfahrkurses nach Anspruch 1, dadurch gekennzeichnet, daß die Suche in wenigstens zwei verschiedenen partiellen Suchniveaus (A1, A2, A3, A4) gesondert durchgeführt wird, wobei jedes partielle Suchniveau (A1; A2; A3; A4) einem verschiedenen Wegekartenabschnitt (A1; A2; A3; A4) einer gemeinsamen Wegekarte entspricht.

7. Verfahren zum Suchen eines optimalen Fahrzeugfahrkurses nach Anspruch 6, gekennzeichnet durch die Schritte:
a) Unterteilen eines Wegekartenbereichs der gemeinsamen Wegekarte in eine Mehrzahl von Wegekartenabschnitte (A1, A2, A3, A4), wobei der Wegekartenbereich die beiden Punkte (O, S) enthält,
b) Vorsehen eines jeweiligen zugeordneten Satzes von Gewichtskoeffizienten für jeden der Wegekartenabschnitte (A1, A2, A3, A4),
c) Durchführen der Suche in jedem der Wegekartenabschnitte (A1, A2, A3, A4) unter Verwendung des zugeordneten Satzes von Gewichtskoeffizienten;
wobei die Sätze von Gewichtskoeffizienten, die den einen der Punkte (O, S) enthaltenden Endabschnitten (A1, A4) der Mehrzahl von Wegekartenabschnitten zugeordnet sind, von den Sätzen von Gewichtskoeffizienten verschieden sind, die einem Zwischenabschnitt (A2, A3) der Mehrzahl von Wegekartenabschnitten zugeordnet sind, welcher Zwischenabschnitt (A2, A3) zwischen den Endabschnitten (A1, A4) liegt.

8. Verfahren zum Suchen eines optimalen Fahrzeugfahrkurses nach Anspruch 7, dadurch gekennzeichnet, daß die den Endabschnitten (A1, A4) zugeordneten Sätze von Gewichtskoeffizienten einer Suche in einem Endabschnitt angepaßt sind, insbesondere dadurch, daß die Fahrentfernungskosten höher als die Wegebreitekosten gewichtet werden.

9. Verfahren zum Suchen eines optimalen Fahrzeugfahrkurses nach Anspruch 7 oder 8, dadurch gekennzeichnet, daß der dem Zwischenabschnitt (A2, A3) zugeordnete Satz von Gewichtskoeffizienten einer Suche in einem Zwischenabschnitt angepaßt ist, insbesondere dadurch, daß die Wegebreitekosten höher als die Fahrentfernungskosten gewichtet werden.

## Revendications

1. Procédé de recherche d'un parcours optimal de cheminement de véhicule reliant deux points (O, S) préétablis sur une carte de route, la recherche étant effectuée séparément en au moins deux niveaux de recherche différents hiérarchiques ou partiels (A1, A2, A3, A4), d'après une pluralité de paramètres variables mis en relation avec le coût du parcours, tels qu'une distance de parcours, une largeur de route et une durée de parcours, à l'aide d'une fonction d'évaluation synthétique, le poids desdits paramètres variables en relation avec le coût de parcours dans ladite recherche étant déterminé par un jeu de coefficients de pondération déterminant le poids de chacun desdits paramètres variables dans ladite fonction d'évaluation, caractérisé par l'utilisation, à chacun des niveaux de recherche, d'un jeu associés de coefficients de pondération pour la recherche, au moins deux niveaux de recherche ayant des jeux différents associés de coefficients de pondération.

2. Procédé de recherche d'un parcours optimal de cheminement de véhicule selon la revendication 1, caractérisé par le fait que ladite recherche est effectuée séparément en au moins deux niveaux de recherche hiérarchiques différents, un niveau de recherche de hiérarchie supérieure auquel est associée une carte de route, moins détaillée que celle d'un niveau de recherche d'une hiérarchie inférieure.

3. Procédé de recherche d'un parcours optimal de cheminement de véhicule selon la revendication 2, caractérisé par les étapes de
a) recherche d'une composante de parcours principale (MR) d'un parcours entre lesdits deux points (O, S) à un niveau de recherche de première hiérarchie, à l'aide d'un premier jeu de coefficients de pondération,
b) recherche de composante de parcours partielle (PR11, PR12, PR21, PR22) reliant la composante de parcours principale (MR) auxdits deux points (O, S), ladite recherche étant effectuée localement et comprenant la recherche à un niveau de recherche de deuxième hiérarchie, à l'aide d'un deuxième jeu de coefficients de pondération et, potentiellement, à un niveau de recherche d'une troisième hiérarchie, à l'aide d'un troisième jeu de coefficients de pondération,
dans lequel la première hiérarchie est supérieure à la deuxième hiérarchie et la deuxième hiérarchie est supérieure à la troisième hiérarchie, et dans lequel les premier, deuxième et troisième jeux de coefficients de pondération sont différents les uns des autres.

4. Procédé de recherche d'un parcours optimal de cheminement de véhicule selon les revendications 2 à 3, caractérisé en ce que le jeu de coefficients de pondération associé à un niveau de recherche de hiérarchie supérieure est adapté à une recherche à une hiérarchie supérieure, en particulier, en pondérant les coûts de largeur de route supérieurs aux coûts de distance de parcours.

5. Procédé de recherche d'un parcours optimal de cheminement de véhicule selon l'une des revendications 2 à 4, caractérisé en ce que le jeu de coefficients de pondération, associé à un niveau de recherche d'une hiérarchie inférieure, est adapté à une recherche à une hiérarchie inférieure, en particulier en pondérant les coûts de distance de parcours supérieurs aux coûts de largeur de route.

6. Procédé de recherche d'un parcours optimal de cheminement de véhicule selon la revendication 1, caractérisé par le fait que ladite recherche est effectuée séparément en au moins deux niveaux de recherche partiels (A1, A2, A3, A4) différents, chaque niveau de recherche partiel (A1; A2; A3; A4) correspondant à une section de carte de route (A1; A2; A3; A4) différente d'une carte de route commune.

7. Procédé de recherche d'un parcours optimal de cheminement de véhicule selon la revendication 6, caractérisé par les étapes de
a) division d'une zone de carte de route de ladite carte de route commune en une pluralité de sections de carte de route (A1, A2, A3, A4), ladite zone de carte de route comprenant lesdits deux points (O, S)
b) application d'un jeu associé respectif de coefficients de pondération à chacune desdites sections de carte de route (A1, A2, A3, A4),
c) réalisation de la recherche dans chacune desdites sections de carte de route (A1, A2, A3, A4) à l'aide du jeu associé de coefficients de pondération,
dans lequel les jeux de coefficients de pondération associés aux sections finales (A1, A4) de ladite pluralité de sections de carte de route, ces sections d'extrémité comprenant l'un desdits points (O, S), sont différents du jeu de coefficients de pondération associé à une section intermédiaire (A2, A3) de ladite pluralité de sections de carte de route, cette section intermédiaire (A2, A3) se trouvant entre lesdites sections d'extrémité (A1, A4).

8. Procédé de recherche d'un parcours optimal de cheminement de véhicule selon la revendication 7, caractérisé en ce que lesdits jeux de coefficients de pondération associés aux sections d'extrémité (A1, A4) sont adaptés à une recherche dans une section d'extrémité, en particulier en pondérant les coûts de distance de parcours supérieurs aux coûts de largeur de route.

9. Procédé de recherche d'un parcours optimal de cheminement de véhicule selon la revendication 7 ou 8, caractérisé en ce que ledit jeu de coefficients de pondération associés à la section intermédiaire (A2, A3) est adapté à une recherche dans une section intermédiaire, en particulier en pondérant les coûts de largeur de route supérieurs aux coûts de distance de parcours.
